# EUROPEAN PATENT APPLICATION

(11) **EP 3 757 433 A1**
(43) Date of publication of application: **30.12.2020**
(21) Application number: 20182701.1
(22) Date of filing: 26.06.2020
(51) Int. Cl.: F16K 11/07, F16K 31/06

(54) **SYSTEMS AND METHODS FOR A CONTROL VALVE WITH AN INTERMEDIATE POSITION**

(30) Priority: 28.06.2019 US 201962868194 P
(71) Applicant: HUSCO Automotive Holdings LLC, Waukesha, WI 53188-0257 (US)
(72) Inventor: Lundeberg, Ben, Dousman, WI Wisconsin 53118 (US); Everson, Christopher, Milwaukee, WI Wisconsin 53202 (US); Wardle, Dean, Oconomowoc, WI Wisconsin 53066 (US); Schmitt, Austin, Hartland, WI Wisconsin 53029 (US)
(74) Representative: Wynne-Jones IP Limited

(57) **Abstract**

The present disclosure provides systems and methods for a control valve. The control valve can include a valve body with a valve bore and a spool received within the valve bore and moveable between a first position, a second position, and a third position, where the second position can be between the first position and the third position. The control valve can also include an electromagnetic actuator coupled to the valve body.

## Description

### CROSS-REFERENCES TO RELATED APPLICATIONS

The present application is based on, claims priority to, and incorporates herein by reference in its entirety, United States Provisional Patent Application No. 62/868,194, filed on June 28, 2019.

### STATEMENT REGARDING FEDERALLY SPONSORED RESEARCH

Not Applicable.

### BACKGROUND

Generally, control valves may include a spool coupled to an actuator that can displace the spool between one or more positions.

### BRIEF SUMMARY

In one aspect, the present disclosure provides a control valve including a valve body having a valve bore with a spool received within the valve bore and moveable between a first position, a second position, and a third position, where the second position is between the first position and the third position. The control valve may also include an actuator coupled to the valve body configured to provide an actuation force to actuate the spool between the first position, the second position, and the third position. In addition, the control valve may be configured to maintain the spool in the second position over a predetermined range of actuation forces.

In another aspect, the present disclosure provides a control valve including a valve body having a valve bore extending therethrough. The control valve can also include a first spring and a second spring. A spool received within the valve bore can be moveable between a first position, a second position, and a third position, where the second position is between the first position and the third position. In addition, the control valve can include an actuator coupled to the valve body configured to provide an actuation force to actuate the spool between the first position, the second position, and the third position. The first spring and the second spring can be configured to provide a spring force to act against the actuation force and the control valve can be configured to maintain the spool in the second position over a predetermined range of actuation forces.

In another aspect, the present disclosure provides a control valve including a valve body having a valve bore extending therethrough and a spool received within the valve bore. The spool can be moveable between a first position, a second position, and a third position, where the second position is between the first position and the third position. The control valve can also include an actuator coupled to the valve body configured to provide an actuation force to actuate the spool between the first position, the second position, and the third position. According to some aspects, when the spool moves from the first position into the second position, the control valve can be configured to maintain the spool in the second position over a predetermined range of actuation forces until the actuator provides an actuation force greater than the predetermined range of actuation forces to move the spool into the third position.

In another aspect, the present disclosure provides a control valve including a valve body having a valve bore and a spool received within the valve bore. The spool can be moveable between a first position, a second position, and a third position, where the second position is between the first position and the third position. The control valve can also include an actuator coupled to the valve body configured to provide an actuation force to actuate the spool between the first position, the second position, and the third position. According to some aspects, a transition from the third position to the first position and then to the second position can define a first response time. In addition, a transition from the third position directly to the second position can define a second response time. According to some aspects, the first response time can be less than the second response time.

In another aspect, the present disclosure provides a control valve that includes a valve body having a valve bore and a plurality of ports and a spool slidably received within the valve bore and moveable between a first position, a second position, and a third position. The second position is axially between the first position and the third position. The control valve further includes an electromagnetic actuator configured to provide an actuation force to selective actuate the spool between the first position, the second position, and the third position, a first spring coupled between the spool and the valve body adjacent to a first end of the spool, and a second spring arranged adjacent to a second end of the spool. The first spring and the second spring are configured to provide a combined spring force on the spool in a direction that opposes the actuation force of the electromagnetic actuator. The combined spring force is configured to increase in response to the spool engaging the second spring when the spool is actuated from the first position to the second position.

In another aspect, the present disclosure provides a control valve that can include a valve body having a valve bore extending therethrough and a plurality of ports. The control valve can also include a spool received within the valve bore and moveable between one or more end positions and an intermediate position positioned axially between the one or more end positions. According to some aspects, each of the one or more end positions and the intermediate position can define a unique port configuration to provide a flow path between at least two of the plurality of ports. The control valve can include an electromagnetic actuator configured to selectively provide an actuation force to actuate the spool between the one or more end positions and an intermediate position. According to some aspects, a control valve can also include a first spring and a second spring configured to provide a combined spring force on a spool in a direction that opposes an actuation force of the electromagnetic actuator. In some aspects, the combined spring force can be configured to provide a step-change in magnitude when a spool is actuated to an intermediate position from one of the one or more end positions.

According to some aspects, a control valve can include an electromagnetic actuator configured to selectively provide an actuation force to actuate the spool between one or more end positions and an intermediate position. According to some aspects, a control valve can also include a first spring and a second spring configured to provide a combined spring force on a spool in a direction that opposes an actuation force of the electromagnetic actuator. In some aspects, the combined spring force can be configured to provide a step-change in magnitude when a spool is actuated to an intermediate position from one of the one or more end positions.

According to some aspects, a step-change in a combined spring force can be configured to maintain a spool in an intermediate position over a predetermined range of actuation forces.

According to some aspects, a predetermined range of actuation forces can be configured to be adjusted based on at least one of a stiffness of a first spring, a stiffness of a second spring, a preload of a first spring, or a preload of a second spring.

According to some aspects, when a spool is in an intermediate position, a first spring can be compressed and a second spring can be engaged, thereby providing a step-change in magnitude by a combined spring force.

According to some aspects, a unique port configuration can provide a flow path between at least two of a plurality of ports.

According to some aspects, a first spring and a second spring can be arranged on opposing ends of a valve body.

According to some aspects, a first spring and the second spring can both be arranged adjacent to a first end or a second end of a spool.

According to some aspects, a first spring and a second spring can be arranged on opposing sides of a first end of a spool.

According to some aspects, a first spring can be coupled between a spool and a valve body.

According to some aspects, a control valve can include a valve element slidably received within a valve bore, where a second spring can be arranged between the valve element and a valve body.

According to some aspects, when a spool is actuated to an intermediate position, the spool can contact a valve element thereby engaging the second spring.

According to some aspects, a first spring can be engaged in each of the one or more end positions and the intermediate position.

According to some aspects, one or more end positions can include a first end position and a second end position, where an intermediate position can be positioned axially between the first end position and the second end position.

According to some aspects, when a spool is in a second end position, a first spring and a second spring can each be compressed.

According to some aspects, a plurality of ports can include four ports.

The foregoing and other aspects and advantages of the disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the disclosure.

### BRIEF DESCRIPTION OF DRAWINGS

The invention will be better understood and features, aspects and advantages other than those set forth above will become apparent when consideration is given to the following detailed description thereof. Such detailed description makes reference to the following drawings.
Fig. 1 is a cross-section of a control valve according to one aspect of the present disclosure with a spool in a first position.
Fig. 2 is a cross-section of the control valve of Fig. 1 with the spool in a second position.
Fig. 3 is a cross-section of the control valve of Fig. 1 with the spool in a third position.
Fig. 4 is an exemplary illustration of a force vs. stroke curve of a control valve according to one aspect of the present disclosure.
Fig. 5 is an exemplary illustration of a force vs. stroke curve of a conventional valve without a dead band.
Fig. 6 is an exemplary illustration of a force vs. stroke curve of a control valve with a dead band.
Fig. 7 is an exemplary illustration of a comparison of a force vs. stroke curve between a control valve with a dead band and a conventional valve without a dead band.
Fig. 8 is an exemplary illustration of a comparison of spool overshoot between a control valve with a dead band and a conventional valve without a dead band.
Fig. 9 is a schematic illustration of a method of switching a control valve according to one aspect of the present disclosure.
Fig. 10 is an exemplary illustration of a force vs. stroke curve according to one aspect of the present disclosure.
Fig. 11 is an exemplary illustration of the force vs. stroke curve according to one aspect of the present disclosure.
Fig. 12 is an exemplary illustration of the force vs. stroke curve according to one aspect of the present disclosure.
Fig. 13 is an exemplary illustration of the force vs. stroke curve according to one aspect of the present disclosure.
Fig. 14 is an exemplary illustration of the force vs. stroke curve according to one aspect of the present disclosure.
Fig. 15 is a schematic illustration of the control valve of Fig. 1 integrated into a cylinder deactivation system according to one aspect of the present disclosure.
Fig. 16 is a cross-section of a control valve according to one aspect of the present disclosure with a spool in a first position.
Fig. 17 is a cross-section of the control valve of Fig. 16 with the spool in a second position.
Fig. 18 is a cross-section of the control valve of Fig. 16 with the spool in a third position.
Fig. 19 is a cross-section of a control valve according to one aspect of the present disclosure with a spool in a first position.
Fig. 20 is a cross-section of the control valve of Fig. 19 with the spool in a second position.
Fig. 21 is a cross-section of the control valve of Fig. 19 with the spool in a third position.
Fig. 22 is a cross-section of a control valve according to one aspect of the present disclosure with a spool in a first position.
Fig. 23 is a cross-section of the control valve of Fig. 22 with the spool in a second position.
Fig. 24 is a cross-section of the control valve of Fig. 22 with the spool in a third position.
Fig. 25 is a cross section of a control valve including an actuator according to one aspect of the present disclosure.
Fig. 26 is a cross-section of the control valve of Fig. 25 with a spool in a first position.
Fig. 27 is a cross-section of the control valve of Fig. 25 with the spool in a second position.
Fig. 28 is a cross-section of the control valve of Fig. 25 with the spool in a third position.
Fig. 29 is a cross-section of a control valve according to one aspect of the present disclosure with a spool in a first position.
Fig. 30 is a cross-section of the control valve of Fig. 29 with the spool in a second position.
Fig. 31 is a cross-section of the control valve of Fig. 29 with the spool in a third position.
Fig. 32 is a cross-section of a ring and groove assembly according to one aspect of the present disclosure.
Fig. 33 is a cross-section of a spring-loaded ball detent assembly according to one aspect of the present disclosure.
Fig. 34 is a cross-section of a check valve assembly according to one aspect of the present disclosure.
Fig. 35 is a cross-sectional perspective view of a control valve with a first and second spool valve according to one aspect of the present disclosure.

### DETAILED DESCRIPTION

Before any aspect of the present disclosure are explained in detail, it is to be understood that the present disclosure is not limited in its application to the details of construction and the arrangement of components set forth in the following description or illustrated in the following drawings. The present disclosure is capable of other configurations and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use aspects of the present disclosure. Various modifications to the illustrated configurations will be readily apparent to those skilled in the art, and the generic principles herein can be applied to other configurations and applications without departing from aspects of the present disclosure. Thus, aspects of the present disclosure are not intended to be limited to configurations shown, but are to be accorded the widest scope consistent with the principles and features disclosed herein. The following detailed description is to be read with reference to the figures, in which like elements in different figures have like reference numerals. The figures, which are not necessarily to scale, depict selected configurations and are not intended to limit the scope of the present disclosure. Skilled artisans will recognize the non-limiting examples provided herein have many useful alternatives and fall within the scope of the present disclosure.

The use herein of the term "axial" and variations thereof refers to a direction that extends generally along an axis of symmetry, a central axis, or an elongate direction of a particular component or system. For example, an axially-extending structure of a component may extend generally along a direction that is parallel to an axis of symmetry or an elongate direction of that component. Similarly, the use herein of the term "radial" and variations thereof refers to directions that are generally perpendicular to a corresponding axial direction. For example, a radially extending structure of a component may generally extend at least partly along a direction that is perpendicular to a longitudinal or central axis of that component. The use herein of the term "circumferential" and variations thereof refers to a direction that extends generally around a circumference or periphery of an object, around an axis of symmetry, around a central axis, or around an elongate direction of a particular component or system.

The present disclosure provides systems and methods for a three position spool valve. Specifically, the present disclosure provides a valve that can be configured to maintain a spool in an intermediate position over a predetermined range of actuation forces applied thereto.

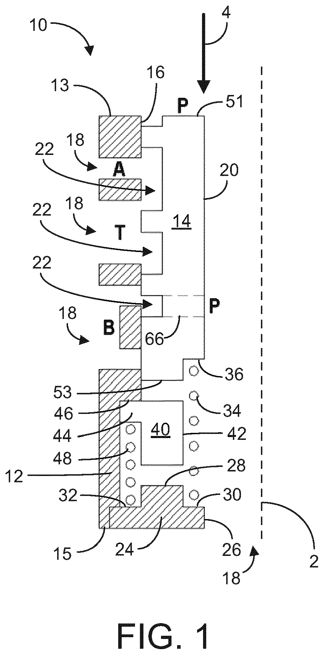

Figs. 1-3 illustrate a non-limiting example of a three-position control valve 10. It is to be understood that the illustrations in the following figures depict half of a cross-section of the control valve 10 (i.e., the control valve 10 is symmetrical about the central axis 2). The control valve 10 can include a valve body 12 and a spool 14. The valve body 12 can include a first end 13 and a second end 15, opposite the first end 13. The valve body 12 can also define a valve bore 16 that extends axially through the valve body 12 from the first end 13 and the second end 15. The valve bore 16 can be sized to receive the spool 14 and provide fluid communication thereto.

The spool 14 can be slidably received within the valve bore 16 to selectively provide fluid communication between at least two of a plurality of ports 18 formed in the valve body 12. In the illustrated non-limiting example, the ports 18 are identified with reference letters A, B, T, and P. In the illustrated non-limiting example, the valve body 12 may define four ports, for example, including a first port or A port, a second port or B port, a third port or T port, and a fourth port or P port. The spool 14 can include a spool bore 20, the spool bore 20 can extend axially through at least a portion of the spool 14 to provide fluid communication thereto (e.g., between the ports 18, to the valve bore 16, then to the spool bore 20). In the illustrated non-limiting example, the spool 14 can include one or more annuli 22 extending radially inwardly between notches formed in the spool 14 to provide fluid communication between one or more ports 18 (e.g., between ports A and T) or between the ports 18 and the spool bore 20 (e.g., between ports B and P).

In the illustrated non-limiting example, the control valve 10 can include an end cap 24 coupled to the second end 15 of the valve body 12. The end cap 24 can be ring-shaped, thereby defining an opening 26 at the second end 15 of the valve body 12 to provide fluid communication from outside the valve body 12 (e.g., from a bore in a valve block, manifold, or mounting structure) to the valve bore 16 and the spool bore 20. This opening may define one of the plurality of ports 18. In the illustrated non-limiting example, the port 18 formed through the end cap 24 may be the P port or the fourth port. The end cap 24 can also define a T-shaped profile, thereby forming a protrusion 28 extending axially towards the first end 13 of the valve body 12. The T-shaped profile of the end cap 24 also defines an inner recess 30 and an outer recess 32 arranged on either side of the protrusion 28.

In some configurations, the end cap 24 can be in the form of a spring cup or spring retainer. For example, the end cap 24 may not be directly coupled to the valve body 12 and may instead be secured therein via a snap ring or retaining ring. It is to be understood that the end cap 24 may be secured to the valve body 12 in many forms and is not limited to the configuration shown.

In the illustrated non-limiting example, the control valve 10 can include a first spring 34 and a second spring 48 arranged adjacent to an end of the spool 14. In the illustrated non limiting example, the first spring 34 is arranged between the spool 14 and the end cap 24 at a second end 53 of the spool 14 (e.g., the lower end from the perspective of Fig. 1). The first spring 34 can be configured to provide a biasing force to bias the spool 14 towards the first end 13 of the valve body 12. In the illustrated non-limiting example, the first spring 34 can always be in engagement with the spool 14 to provide a biasing force thereto. For example, the first spring 34 can be engaged or compressed in every position of the spool 14. The first spring 34 can be coupled between the spool 14 and the valve body 12. For example, the spool 14 can provide one spring seat for the first spring 34 in the form of a spool recess 36 extending axially into the spool 14 towards the first end 13 of the valve body 12. The inner recess 30 formed in the end cap 24 can provide another spring seat for the first spring 34.

The control valve 10 can also include a valve element 40 slidably received within the valve bore 16 and arranged between the spool 14 and the end cap 24. The valve element 40 can also be ring-shaped and include an opening 42 so that the valve element 40 does not occlude fluid flow within the control valve 10. In the illustrated non limiting example, the valve element 40 can have an L-shaped profile that defines a radial protrusion 44 that extends radially outward to meet the inner surface of the valve bore 16. The valve bore 16 can have a stepped profile defining a flange 46 arranged near the second end 15 of the valve body. In some non-limiting examples, the valve element 40 can be a spring cup.

In the illustrated non-limiting example, the control valve 10 can include a second spring 48 arranged between the valve element 40 and the valve body 12. In the illustrated non-limiting example, the second spring is arranged between the valve element 40 and the end cap 24 adjacent to the second end 53 of the spool. The second spring 48 can be configured to provide a biasing force to bias the valve element towards the first end 13 of the valve body 12. The radial protrusion 44 of the valve element 40 can provide one spring seat for the second spring 48 and the outer recess 32 of the valve element 40 can provide another spring seat of the second spring 48. In the illustrated non-limiting example, the first spring 34 and the second spring 48 are concentric with each other with the first spring 34 arranged inside the second spring 48.

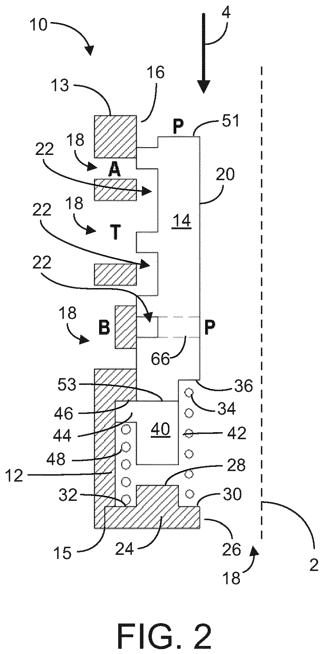

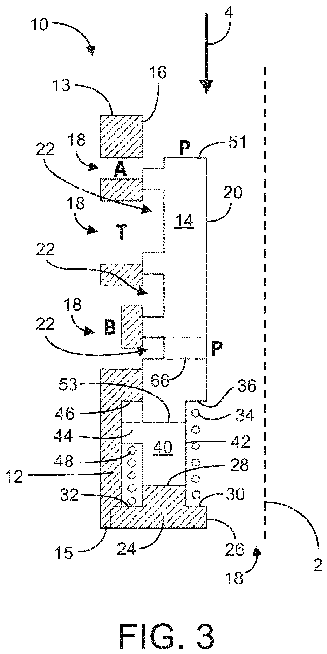

With continued reference towards Figs. 1-3, the spool 14 can be moveable between a first position (Fig. 1), and second position (Fig. 2), and a third position (Fig. 3), where the second position is between the first position and the third position (i.e., an intermediate position). In some non-limiting examples, the spool 14 can be moveable between one or more end positions with an intermediate position axially between the one or more end positions. For example, the first position can be a first end position and the third position can be a second end position that is opposite the first end. As such, the intermediate position could be axially between the first end position and the second end position. In addition, the valve element 40 is moveable between a first position (Fig. 1) and a second position (Fig. 3).

As will be described in detail below, and as will be applicable to each of the non-limiting examples described herein, the first spring 34 can be configured to provide a biasing force on the spool 14 that acts against the actuation force 4. In some non-limiting examples, the first spring can be configured to constantly or continually be providing a biasing force onto the spool 14. Additionally, the second spring 48 can be configured to selectively provide an additional biasing force on the spool 14 that also acts against the actuation force 4. In some non-limiting examples, the selective application of the biasing force can be dependent on the position of the spool 14. For example, when the spool 14 is in the first position, the second spring 48 may be out of engagement with the spool 14. Then, when the spool 14 is in at least one of the second or third positions, the second spring 48 may become in engagement with the spool 14. That is, when the spool 14 enters the second position, the second spring 48 can become engaged with the spool 14. Further, when the spool 14 is moved from the second position to the third position, the second spring 48 can remain engaged and compress.

With the spool 14 in the first position, a first end 51 of the spool 14 can be in contact with an actuation element (not shown) configured to provide an actuation force 4 to drive the spool towards the second end 15 of the valve body 12, as illustrated by the downward direction of the actuation force 4 (e.g., from the perspective of Fig. 1). That is, the actuation force 4 can be applied in a first direction towards the second end 15 of the valve body 12 (as illustrated by arrow 4). The first spring 34 can bias the spool 14 towards the first end 13 of the valve body 12 to maintain contact between the actuation element and the spool 14. As such, the first spring 34 can be configured to provide a force in a second direction towards the first end 13 of the valve body 12. In other words, the actuation force 4 can be applied in a first direction and the first spring 34 can apply a force in a second direction that is opposite the first direction. With the valve element 40 in the first position, the radial protrusion 44 of the valve element 40 is in engagement with the flange 46 in the valve body 12. As such, the flange 46 can act as one axial stop for the valve element 40.

When the spool 14 is driven from the first position to the second position, the first spring 34 becomes compressed and a second end 53 of the spool 14 engages the valve element 40. In the illustrated non-limiting example, when the spool 14 is in the second position, the valve element 40 remains in the first position. Upon the spool 14 making contact with the valve element 40, the second spring 48 and the first spring 34 both act on the spool 14 against the actuation force 4 to maintain the spool 14 in the second position. That is, when the spool 14 is in the second position, the second spring 48 becomes engaged by the spool 14. In the illustrated non-limiting example, the engagement of the second spring 48 by the spool 14 is provided via the valve element 40. The second spring 48 can be configured to provide a force in a second direction towards the first end 13 of the valve body 12. In other words, the actuation force 4 can be applied in a first direction and the first spring 34 and the second spring 48 can apply a force in a second direction that is opposite the first direction.

When the spool 14 is driven from the second position to the third position, the first spring 34 and the second spring 48 become compressed and the valve element 40 is displaced into the second position in which the valve element 40 engages the protrusion 28 on the end cap 24. As such, the protrusion 28 on the end cap 24 can act as another an axial stop for the valve element 40, thereby defining the third position of the spool 14.

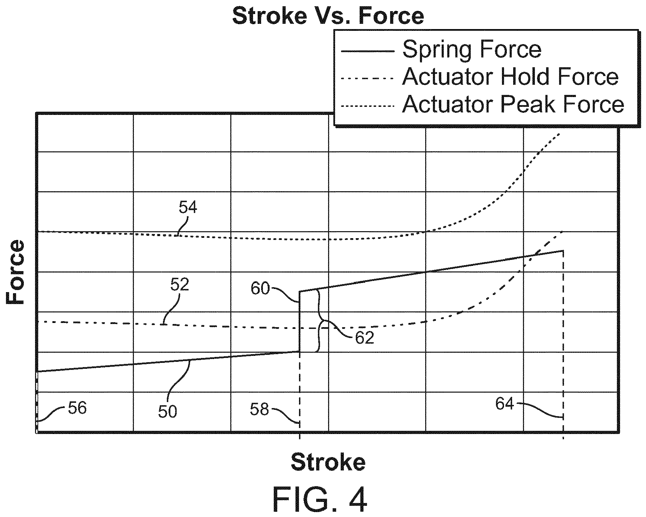

In the following figures, exemplary graphs and illustrations will be used to illustrate operation of the control valve 10. For ease of illustration, like elements will be labeled using like reference numerals. Referring now to Figs. 4, a non-limiting example of a force vs. stroke curve for the control valve 10 is illustrated. In the following description, reference will be made to Figs. 1-4 to shed light on the operation of the control valve 10. In the illustrated non-limiting example, line 50 represents a spring force curve, line 52 represents a hold force curve, and line 54 represents a peak force curve. The spring force curve 50 represents the total force that the first spring 34 and/or the second spring 48 apply to the spool 14 over the stroke length of the spool 14. The hold force curve 52 represents a force needed to be applied by an actuator to maintain the spool 14 in a position. For example, the hold force curve 52 can represent an actuation force required to maintain the spool 14 in the second position or the third position. The peak force curve 54 represents a maximum output force that can be applied by the actuator.

As illustrated in Fig. 4, the control valve 10 can define a total stroke length between the first position 56 and the third position 64. Thus, the spool 14 can be mechanically limited (e.g., by an end stop) in the first position 56 and the third position 64 thereby defining the total stoke length of the spool 14. That is, the first position 56 may be as a first end position for the spool 14 and the third position 64 may be as a second end position for the spool 14. The second or intermediate position 58 can be at a position that is between the first end position and the second end position. That is, the second or intermediate position 58 can be a distinct position that can be actuated to or from the first position 56 or the third position 64.

As previously described herein, the spool 14 can be spring biased to the first position 56 (as illustrated by a broken vertical line in Fig. 4) by the first spring 34. In other words, the spool 14 can remain in the first position 56 without an actuation force 4 applied to the spool 14 (i.e., no power is required to be applied to an actuator) and the spool 14 can be held in the first position 56 via the first spring 34. During operation, as the actuation force 4 is applied, the spool 14 begins to move toward the second position 58 (as illustrated by a broken vertical line in Fig. 4). During the transition from the first position 56 to the second position 58, the actuator can be commanded to provide a force that follows the path of the hold force curve 52 (or any force above the opposing spring forces) and the spring force increases as the first spring 34 is compressed. When the spool 14 reaches the second position 58, the second spring 48 becomes engaged. In the illustrated non-limiting example, the second end 53 of the spool 14 engages the valve element 40, thereby causing the first spring 34 and the second spring 48 to act against the actuation force 4. In the illustrated non-limiting example, this causes a step-increase or step-change in the spring force curve 50. That is, when the second spring 48 becomes engaged to provide an additional biasing force resulting in a combined biasing/spring force with the first spring 34, the combined biasing force acting on the spool 14 provides a step-change in magnitude. The step-change in magnitude results in an increase in the spring force curve 50 at a constant stroke or position of the spool 14. That is, the step-change magnitude increase occurs at a particular position along the stroke of the spool 14 (e.g., at line 58). In some non-limiting examples, the spring force curve 50 may vary as the second spring 48 becomes in or out of engagement with the spool 14. For example, changes in the slope of the spring force curve 50 can occur. In another non-limiting example, the spring force curve 50 can achieve an undefined slope when the second spring 48 becomes engaged by the spool (i.e., the spring force curve 50 may become vertical in the second position 58.

This step-change in spring force can define a dead band 60 in which the combined spring forces from the first spring 34 and the second spring 48 are greater than or equal to an output force by the actuator. In the illustrated non-limiting example, the dead band 60 may define a predetermined range 62 of actuation forces that can be applied to the spool 14 in which the first spring 34 and the second spring 48 can maintain the spool 14 in the second position 58. For example, as illustrated in Fig. 4, the hold force curve 52 intersects the spring force curve 50 through the dead band 60. As illustrated, the hold force (e.g., actuation force 4) provided by the actuator is less than the combine force of the first spring 34 and the second spring 48, which act in a direction opposite to the actuation force 4. As such, the actuation force 4 is unable to overcome the spring force unless the actuator is commanded to provide an output force larger than the predetermined range 62.

To transition between the second position 58 to the third position 64 (as illustrated by a broken vertical line in Fig. 4), the actuator may, for example, provide an actuation force greater than the predetermined range 62 of actuation forces (i.e., provide an actuation force greater than the combined spring force). In the illustrated non-limiting example, the actuator can be commanded to provide an output force along the peak force curve 54 and drive the spool 14 into the third position where the spool 14 is in contact with the valve element 40 and the valve element 40 is in contact with the protrusion 28 on the end cap 24.

As noted above, the dead band 60 can define a predetermined range 62 of actuation forces which may be applied to the spool 14 while still maintaining the spool 14 in the second position 58. This may, for example, reduce the precision of force control required by an actuator and/or springs, which can serve to reduce the overall cost of the actuator. The predetermined range 62 (i.e., the dead band 60) can be adjusted or optimized by varying a pre-load on the first spring 34 and/or the second spring 48 or changing the stiffness of the first spring 34 and/or the second spring 48.

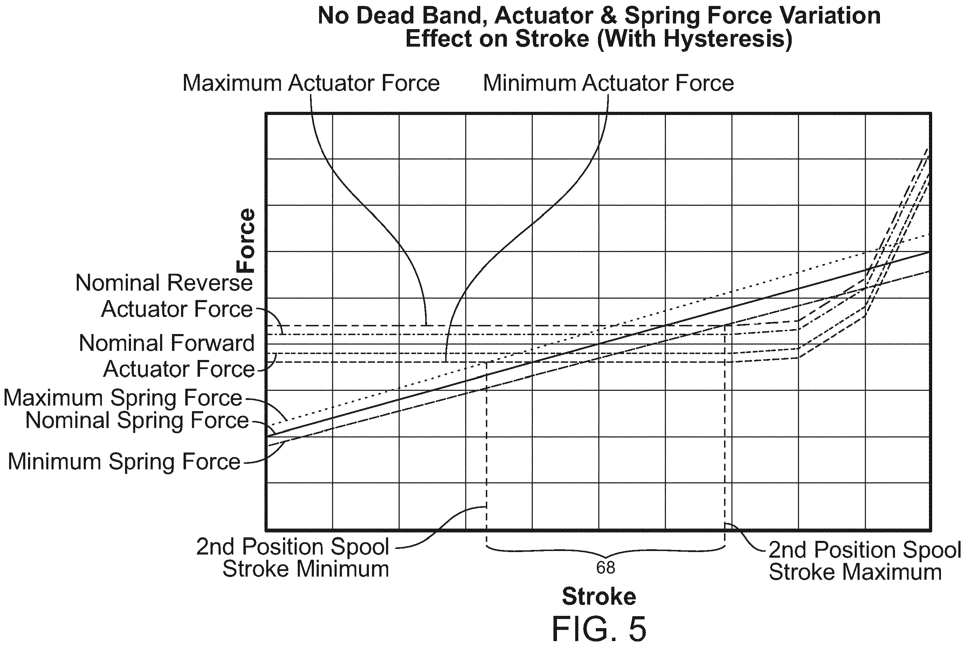

In addition to the distinct benefits described above, the dead band 60 can also reduce a required spool-to-body overlap to ensure proper sealing when in the second position over conventional valves without a dead band. This can reduce the overall stroke length of the valve, thereby reducing the overall size and cost of the valve. For example, Fig. 5 illustrates numerous factors that can affect the spool-to-body overlap of a conventional valve without a dead band. As illustrated, factors like variation in an actuator or spring force (e.g., due to manufacturing tolerances), as well as hysteresis (e.g., due to friction), can influence the length 68 of the stroke taken up by the second position due to the required spool-to-valve overlap needed to account for the various factors previously noted. Additionally, increasing the overall stroke length can decrease the speed at which the spool can shift between each position.

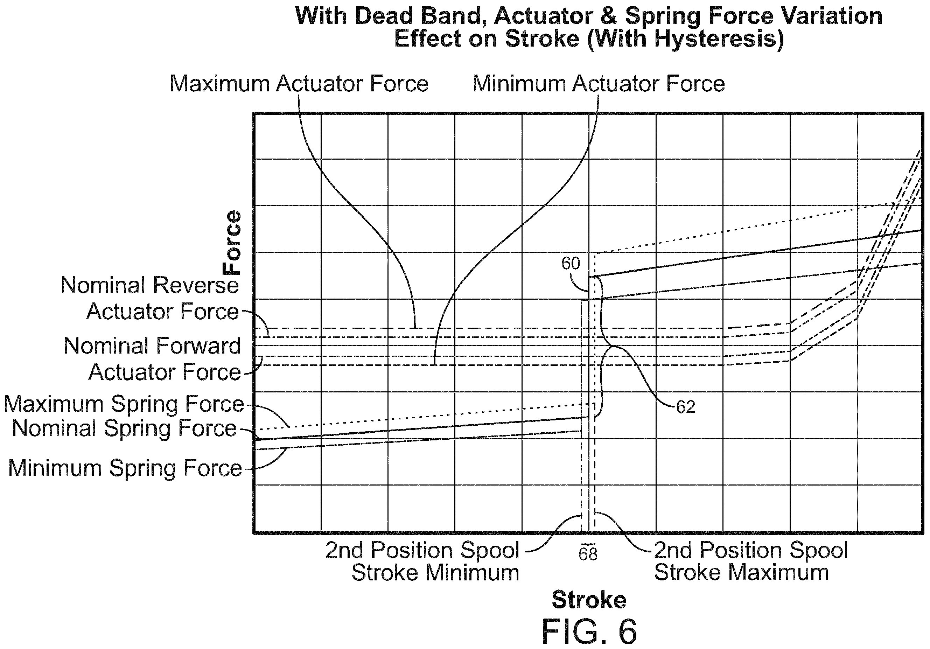

As illustrated in Fig. 6, the addition of a dead band 60 reduces or eliminates all effects of actuator and spring force variation on the stroke of the spool. In other words, a shorter overall stroke length can be achieved by the addition of a dead band due to a reduction in the amount of spool-to-body overlap in the second position. As previously described herein, the dead band 60 defines a predetermined range 62 of actuation forces that can be applied to the spool in which the first and second springs can maintain the spool in the second position. Thus, as illustrated in Fig. 6, the predetermined range 62 of actuation forces in which the spool is maintained in the second position (i.e., the size of the dead band 60) can be adjusted or fine-tuned to be larger than, for example, variations in the actuation forces applied by the actuator or the effects of hysteresis. In the illustrated non-limiting example, the only variation remaining can be caused by part tolerances. In one non-limiting example, a benefit of the length 68 of the stroke taken up by the second position being based off part tolerances is that the tolerances can be verified prior to the assembly and test of the parts.

In addition, the dead band 60 can make the spool less susceptible to mechanical shocks or vibrations while in the second position. For example, any additional mechanical shocks or vibrations applied to the spool would need to be large enough to overcome the dead band 60 (i.e., result in a total force, including the actuation force, that would be greater than the predetermined range of actuation forces 62 defined by the dead band 60).

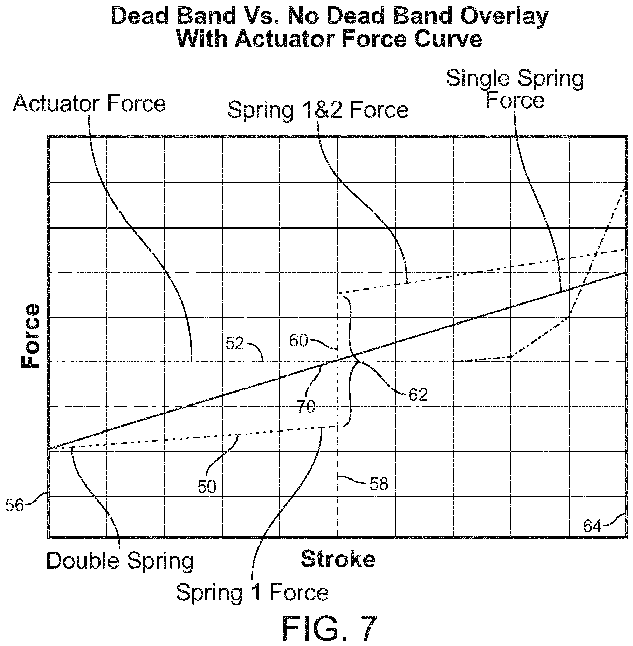

Fig. 7 illustrates an exemplary graph of a spring force curve 50 having a dead band 60 and a spring force curve 70 of a conventional valve without a dead band, each overlaid with an exemplary actuator force curve 52. By inspection of the spring force curve 50, it can be seen that the force provided from the first spring between the first position 56 and the second position 58 can be significantly less than the force provided by a single spring, as shown by spring force curve 70. Thus, with an equal actuation force, the double spring design of the control valve with the dead band 60 can have an increased speed/acceleration of the spool and a faster spool transition time between positions. In other words, the combination of the first and second springs, as well as the dead band 60, can allow the valve to be optimized for spool transition speed and spool position precision, as will be further described herein.

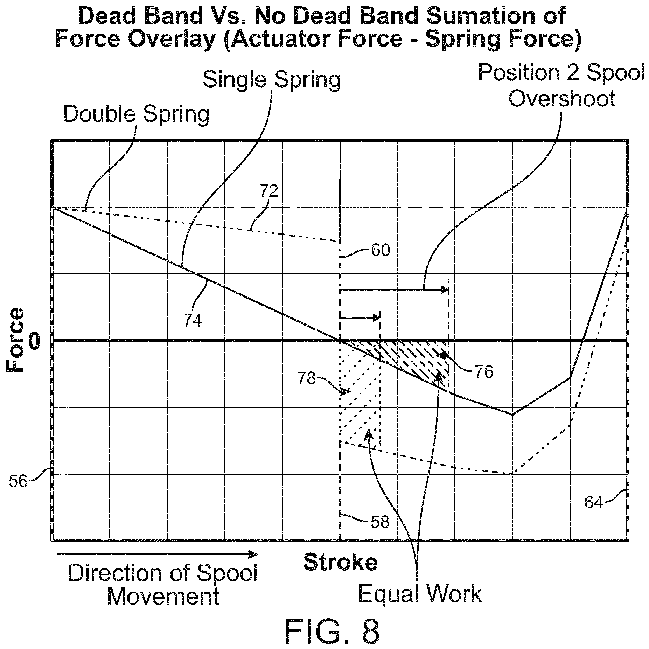

Fig. 8 illustrates the summation of forces on a spool of a valve with a dead band, shown by curve 72, and a conventional valve without a dead band ,shown by curve 74 (e.g., the actuation force curve 52 minus the spring force curve 50 or spring force curve 70 of Fig. 7). As illustrated in Fig. 8, the addition of a dead band 60 can drastically reduce spool overshoot when the spool is actuated into the second position 58. Assuming equal spool velocity, Fig. 8 illustrates one non-limiting example of how a conventional valve without a dead band has a larger amount of spool overshoot, as illustrated by shaded area 76 (i.e., work done by the spool), compared to a valve with a dead band 60, as illustrated by shaded area 78 (i.e., work done by the spool). This decrease in spool overshoot can decrease the settling time of the spool and increase the speed at which the spool can be transitioned between positions. Additionally, the decrease of spool overshoot can decrease the spool-to-body overlap required to account for the amount of overshoot to prevent leakage. Further, the decrease of spool overshoot can reduce the risk of the spool overshooting to the third position 64.

In some cases, to achieve fast switching of the control valve 10 (i.e., a fast response time), one position may be skipped to achieve a fast transition between an initial position and a desired position within the three-position control valve 10. As used herein, the phrase response time is defined as the amount of time taken for the spool to transition between the initial position and the desired position. In one non-limiting example, the spool may be in the third position and it may be desired to transition the spool to the second position. In this non-limiting example, it may be faster to command the spool to the first position and then command the spool to the second position, as opposed to commanding the spool directly to the second position from the third position. For example, the total response time to transition the spool from the third position, then to the first position, and finally to the second position may define a total response time that is less than the predetermined response time from transitioning directly to the second position from the third position.

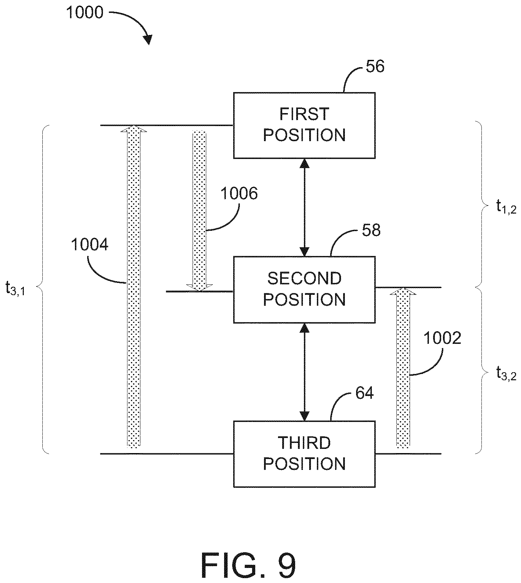

As illustrated in Fig. 9, one such method 1000 of switching the control valve 10 between positions is shown. As previously described herein, the spool can be moveable between three different positions: the first position 56, the second position 58, and the third position 64. The transition between these positions may each define a response time (e.g., t_{3,2}, t_{3,1}, t_{1,2}, etc.). In some non-limiting examples, the response time for a spool may be limited due to various factors such as the actuation force applied to the spool, friction, mass/momentum of moving components, spring forces, and flow forces all can influence the response time for a valve changing positions. As illustrated, the control valve 10 may define a response time t_{3,2} when actuated directly from the third position 64 to the second position 58 (as shown by arrow 1002). Similarly, the control valve 10 may define a response time t_{3,1} when actuated from the third position 64 to the first position 56 (as shown by arrow 1004) and a response time t_{1,2} when actuated from the first position 56 to the second position 58 (as shown by arrow 1006). As will be explained in greater detail below, the total time for the control valve 10 to transition from the third position 64 to the first position 56 and then from the first position 56 to the second position 58 (i.e., t_{3,1} + t_{1,2}) may define a first response time (e.g., a total response time) that is less than a second response time defined by the control valve 10 being actuated directly from the third position 64 to the second position 58 (i.e., t_{3,2}).

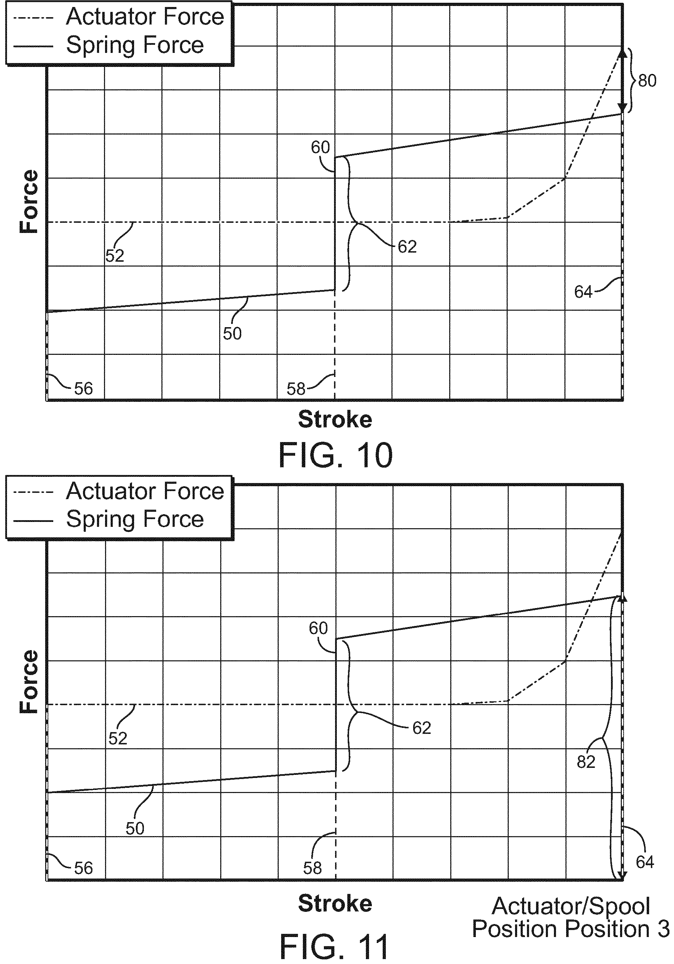

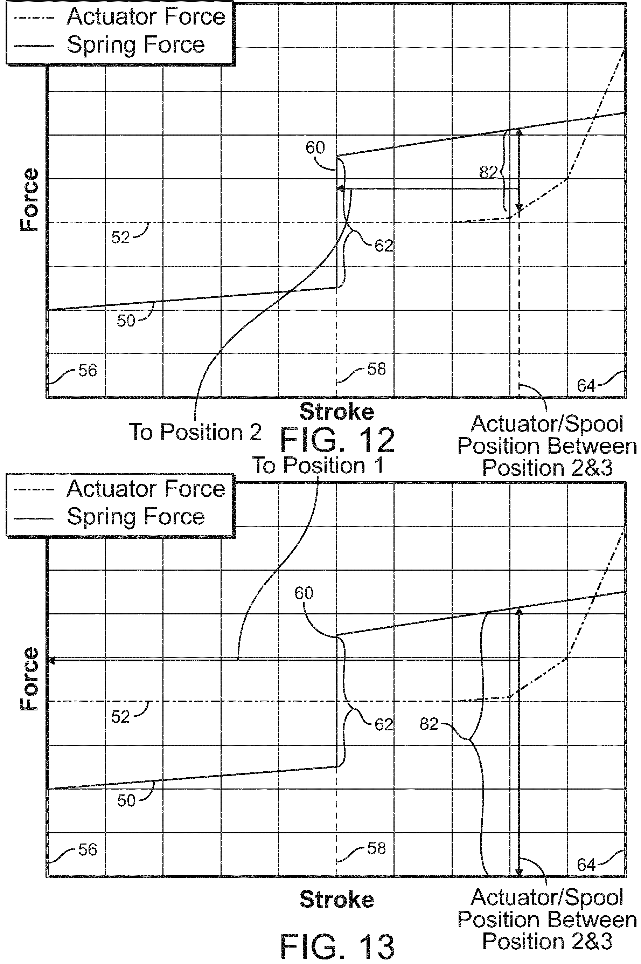

In the following figures, exemplary graphs and illustrations will be used to illustrate operation of the control valve 10 when switching between positions. For ease of illustration, like elements will be labeled using like reference numerals. Looking towards Fig. 10, the control valve 10 can be held in the third position 64 by an actuator providing a required hold force 80 (i.e., an actuation force that is at least larger than the opposing forces provided by the first and/or second springs). When transitioning from the third position 64 towards either the first position 56 or the second position 58, the switching force 82 (i.e., the effective or net force applied to the spool) is large (see Fig. 11). In the example shown in Fig. 11, the switching force 82 is the sum of the force provided by the first and second springs. If the spool is actuated directly to the second position 58 (the desired position) from the third position 64 (the initial position), the switching force 82 is drastically reduced (see Fig. 12) because the actuator begins to provide an actuation force, that opposes the forces from the first and second springs, to slow the spool so that it may be accurately placed in the second position 58. Thus, the response time t_{3,2} (see Fig. 9) may be slow due to low spool accelerations and velocities.

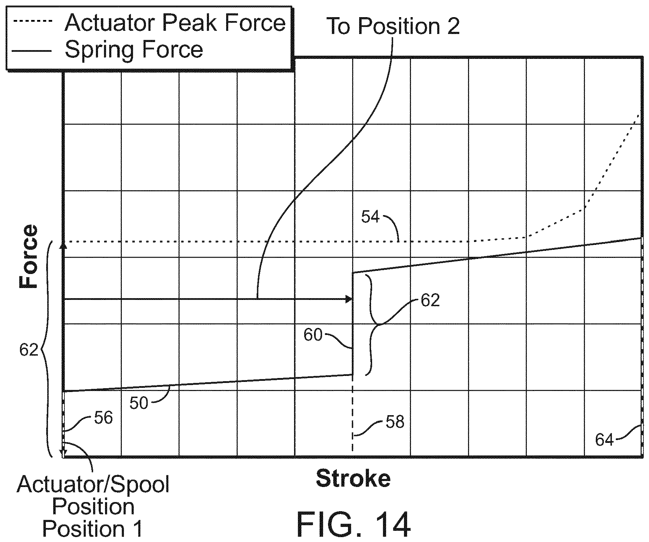

In contrast, if the spool is actuated from the third position 64 (the initial position) to the first position 56, and then to the second position 58 (the desired position), the control valve 10 may take advantage of the use of large switching forces. For example, referring to Fig. 13, when switching from the third position 64 to the first position 56, the actuator may provide no actuation force (i.e., the actuator may be off or little to no current may be applied to, for example, a solenoid). This provides for the forces from the first and second springs to act on the spool without being opposed by an actuation force, resulting in a large switching force (see Fig. 13). Once the spool is in the first position 56, the spool may then be actuated to the second position 58 using the peak force from the actuator (i.e., the actuator can be commanded to provide an output force along the peak force curve 54), resulting in a large switching force (see Fig. 14). By taking advantage of the use of large switching forces, as well as the dead band 60, the spool accelerations and velocities can be much higher. For example, a spool may be rapidly transitioned from the third position 64 to the first position 56 without the need for the actuator to provide a force to slow down the spool, as the first position 56 may be defined by a physical end stop within a spool valve. Then, when switching to the second position 58, large actuation forces may be used due to the dead band 60 defining a range of actuation forces 62 with which the spool may be held. In addition, as previously described herein, larger spool velocities may be used as the spool is transitioning from the first position 56 to the second position 58 as the dead band 60 provides for a greater resistance to spool overshoot. Thus, the total time for the control valve 10 to transition from the third position 64 to the first position 56 and then from the first position 56 to the second position 58 (i.e., t_{3,1} + t_{1,2}) may define a total response time that is less that the response time if the control valve 10 actuated directly from the third position 64 to the second position 58 (i.e., t_{3,2}).

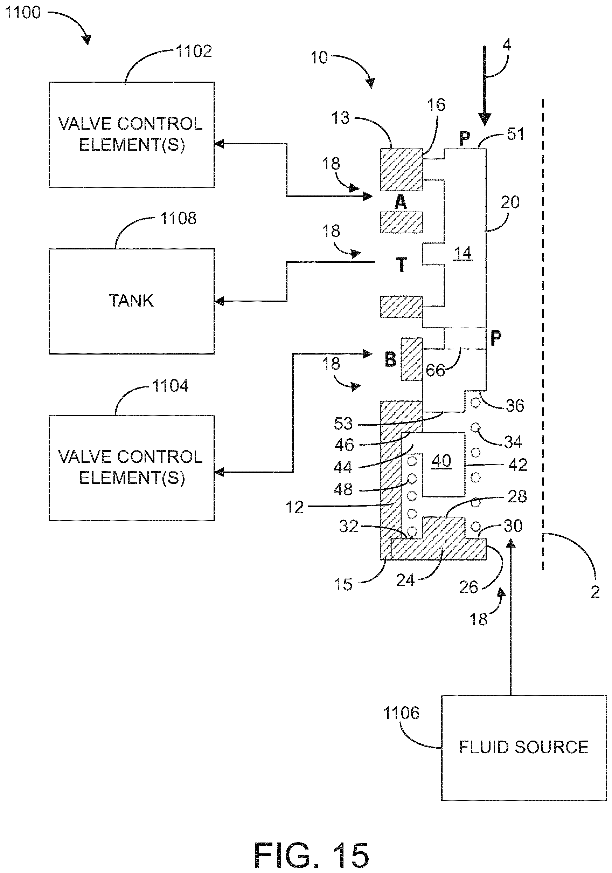

Referring now to Fig. 15, an exemplary schematic of a four-way, three-position control valve 10 utilized in a cylinder deactivation system 1100 is illustrated. In the illustrated non-limiting example, ports A and B can be in fluid communication with one or more valve control elements 1102,1104, respectively. For example, the valve control elements 1102,1104 can be a valve lifter in an internal combustion engine and the valve lifter can be configured to inhibit a camshaft from actuating a valve when a pressurized fluid is delivered thereto from a pressurized fluid source 1106 through ports A and/or B (e.g., an intake or exhaust valve remain closed regardless of a rotational position of a camshaft). Similarly, the valve control elements 1102,1104 can be configured to allow a camshaft to actuate the valve if the fluid source 1106 is inhibited to ports A and/or B (e.g., the intake or exhaust valves controlled by the valve control elements 1102,1104 open and close normally as the camshaft rotates). For example, ports A and/or B can be in fluid communication with a tank 1108 such that fluid from the valve control elements 1102,1104 can be exhausted to the tank 1108 through port A and port B, respectively.

Now that the functionality of the cylinder deactivation system 1100 has been described, various port configurations of the control valve 10 will be described with reference to Figs. 1-3 and 15-24. It is to be understood that the ports described in Fig. 15 are labeled using like reference numerals or letters in the non-limiting examples described in Figs. 1-3 and 16-24. As such, although the port configuration may change, ports labeled using like reference numerals or letters are to be understood as being in fluid communication to the components described in Fig. 15. For example, it is to be understood that port P is in fluid communication with a fluid source 1106 to provide pressurized fluid therefrom, port A is in fluid communication with one or more valve control elements 1102, port B is in fluid communication with one or more valve control elements 1104, and port T is in fluid communication with a tank 1108 for exhausting fluid thereto.

In general, the four-way, three-position control valve 10 can define a unique port configuration in each of the spool positions. For example, when the spool is in the first position, the control valve 10 can be in a first port configuration, when the spool is in the second position, the control valve 10 can be in a second port configuration, and when the spool is in the third position, the control valve can be in a third port configuration. Each port configuration can be unique or distinct from another port configuration to provide a unique flow path, or flow path arrangement, between at least two of the plurality of ports on the valve body. For example, when the control valve transitions from one port configuration to another (e.g., as the spool moves between positions), at least one port on the control valve 10 can be opened or closed to inhibit or allow fluid communication thereto.

Referring to Figs. 1-3 and 15, pressurized fluid from the fluid source 1106 can be provided to the valve bore 16 through the opening 26 in the end cap 24 at the second end 15 of the valve body 12 (e.g., port P). Then, the pressurized fluid can be delivered to ports A and B via the annuli 22 formed within the spool and the ports 18 formed in the valve body 12, as is known in the art. In some non-limiting examples, a passage 66 can be formed in the spool 14 to provide fluid communication from the spool bore 20 to a port 18 (e.g., port B). In the illustrated non-limiting example, fluid can be exhausted from port A and/or port B to the tank 1108 via port T through the annuli 22 formed in the spool 14 that can provide a fluid conduit to a port 18, as is known in the art.

When the spool 14 is in the first position (e.g., when the actuator is in a de-energized state), the control valve 10 can be in a first port configuration. In the illustrated non-limiting example, port A can be in fluid communication with port T, thereby exhausting fluid from valve control elements 1102 to the tank 1108 (activating at least a portion of the intake/exhaust valves). Port B can be in fluid communication with port P, thereby allowing pressurized fluid from the fluid source 1106 to the valve control elements 1104 (deactivating a different portion of the intake/exhaust valves). As such, when the spool 14 is in the first position (Fig. 1), a portion of the intake/exhaust valves may be deactivated while another portion of the intake/exhaust valves may be activated. For example, in a four valve/cylinder arrangement, valve control elements 1102 can control one intake valve and two exhaust valves and valve control element 1104 can control one intake valve. Thus, when the spool 14 is in the first position, one intake valve may remain closed (deactivated) to restrict the amount of air entering a combustion chamber. For ease of description, this port configuration (e.g., port A open to port T and port B pressurized through port P) will be referred to as a partially deactivated configuration.

When the spool 14 is in the second position (Fig. 2), the control valve 10 can be in a second port configuration. In the illustrated non-limiting example, ports A and B can both be in fluid communication with port T, thereby exhausting fluid from valve control elements 1102,1104 to tank 1108. As such, when the spool 14 is in the second position, all of the intake/exhaust valves may be activated allowing for normal operation of the intake/exhaust valves by the camshaft. For ease of description, this port configuration (e.g., port A open to port T and port B open to port T) will be referred to as an activated configuration.

When the spool 14 is in the third position (Fig. 3), the control valve 10 can be in a third port configuration. In the illustrated non-limiting example, ports A and B can both be in fluid communication with the fluid source 1106 to provide pressurized fluid to valve control elements 1102,1104, respectively. As such, when the spool 14 is in the third position, all of the intake/exhaust valves may be deactivated, thereby preventing the intake/exhaust valves from being opened by the camshaft. For ease of description, this port configuration (e.g., port A open to port P and port B open to port P) will be referred to as a deactivated configuration.

In the illustrated non-limiting example, port B can be designed as a looped port. This may, for example, enable port B to provide fluid communication to both ports T or P without significantly increasing the stroke of the spool 14.

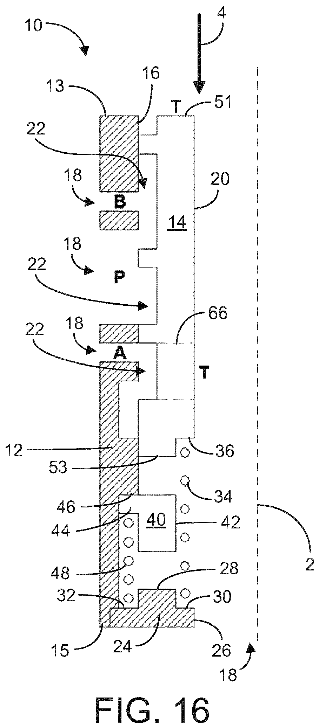

Various other port configurations are envisioned. It should be understood that the control valve 10 depicted in Figs. 16-24, except as otherwise noted below, are identical to the control valve 10 described with reference to Figs. 1-4 and 15 in structure and functionality, and that all parts of the control valve 10 that are labeled with like reference numerals refer to similar parts. As such, only aspects that are substantially different than the non-limiting example shown in Figs. 1-4 and 15 will be explained in the following paragraphs.

Figs. 16-18 illustrate yet another non-limiting example of a port configuration for the control valve 10. In the illustrated non-limiting example, pressurized fluid from the fluid source (not shown) can be provided to ports A and B via the annuli 22 formed within the spool 14 and the ports 18 formed in the valve body 12 (e.g., port P), as is known in the art. In the illustrated non-limiting example, fluid can be exhausted to the tank (not shown) from port A and/or port B through the ports 18 formed in the valve body 12, to the annuli 22 formed in the spool 14, which can provide a fluid conduit the spool bore 20, as is known in the art. The fluid may then be exhausted out of the opening 26 in the end cap 24 at the second end 15 of the valve body 12 (e.g., port T). In some non-limiting examples, a passage 66 can be formed in the spool 14 to provide fluid communication from the spool bore 20 to a port 18 (e.g., port A).

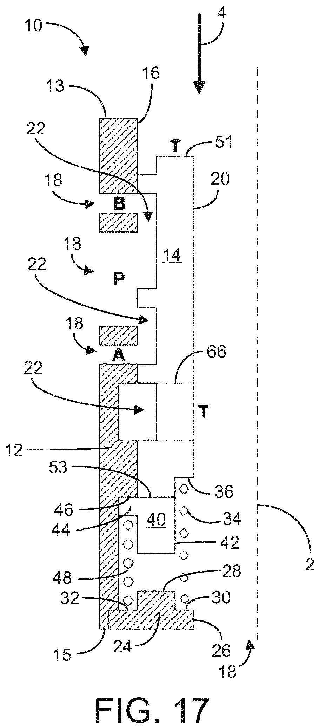

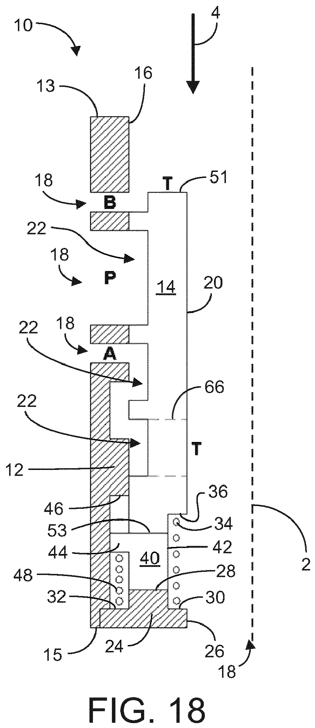

When the spool 14 is in the first position (e.g., Fig. 16, when the actuator is in a de-energized state), port A can be in fluid communication with port T and port B can be in fluid communication with port P. As such, when the spool 14 is in the first position, the control valve 10 is in the partially deactivated configuration. When the spool 14 is in the second position (Fig. 17), ports A and B can both be in fluid communication with port P. As such, the control valve 10 is in the deactivated configuration. When the spool 14 is in the third position (Fig. 18), ports A and B can both be in fluid communication with port T. As such, the control valve 10 is in the activated configuration.

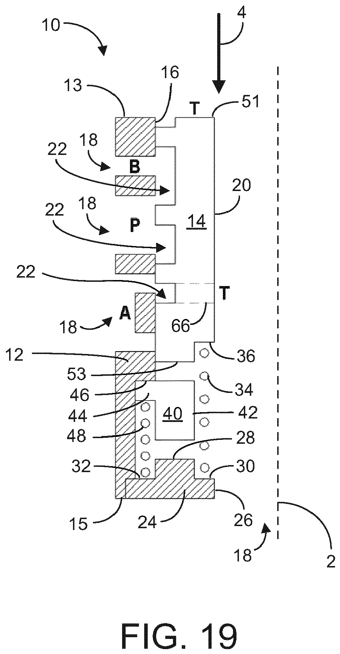

Figs. 19-21 illustrate yet another non-limiting example of a port configuration for the control valve 10. In the illustrated non-limiting example, pressurized fluid from the fluid source (not shown) can be provided to ports A and B via the annuli 22 formed within the spool 14 and the ports 18 formed in the valve body 12 (e.g., port P), as is known in the art. In the illustrated non-limiting example, fluid can be exhausted to the tank (not shown) from port A and/or port B through the ports 18 formed in the valve body 12, to the annuli 22 formed in the spool 14, which can provide a fluid conduit the spool bore 20, as is known in the art. The fluid may then be exhausted out of the opening 26 in the end cap 24 at the second end 15 of the valve body 12 (e.g., port T). In some non-limiting examples, a passage 66 can be formed in the spool 14 to provide fluid communication from the spool bore 20 to a port 18 (e.g., port A).

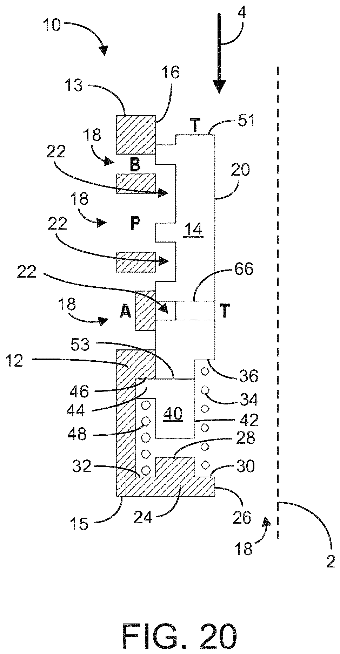

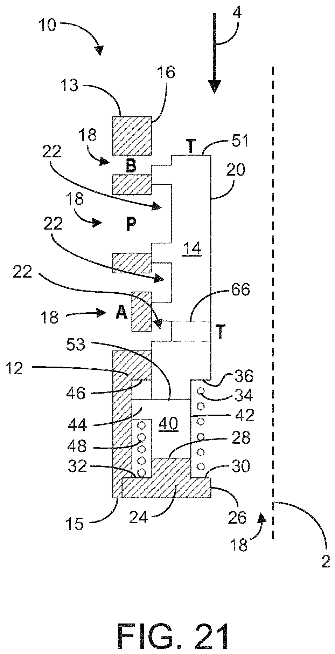

When the spool 14 is in the first position (e.g., Fig. 19, when the actuator is in a de-energized state), port A can be in fluid communication with port T and port B can be in fluid communication with port P. As such, when the spool 14 is in the first position, the control valve 10 is in the partially deactivated configuration. When the spool 14 is in the second position (Fig. 20), ports A and B can both be in fluid communication with port P. As such, the control valve 10 is in the deactivated configuration. When the spool 14 is in the third position (Fig. 21), ports A and B can both be in fluid communication with port T. As such, the control valve 10 is in the activated configuration.

In the illustrated non-limiting example, port A can be designed as a looped port. This may, for example, enable port A to provide fluid communication to both ports T or P without significantly increasing the stroke of the spool 14.

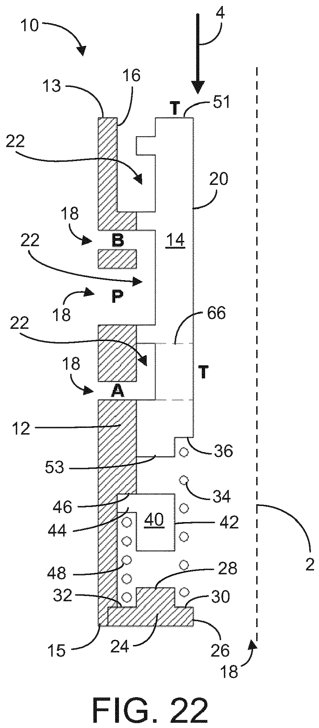

Figs. 22-24 illustrate yet another non-limiting example of a port configuration for the control valve 10. In the illustrated non-limiting example, pressurized fluid from the fluid source (not shown) can be provided to ports A and B via the annuli 22 formed within the spool 14 and the ports 18 formed in the valve body 12 (e.g., port P), as is known in the art. In the illustrated non-limiting example, fluid can be exhausted to the tank (not shown) from port A and/or port B through the ports 18 formed in the valve body 12, to the annuli 22 formed in the spool 14, which can provide a fluid conduit the spool bore 20, as is known in the art. The fluid may then be exhausted out of the opening 26 in the end cap 24 at the second end 15 of the valve body 12 (e.g., port T). In some non-limiting examples, a passage 66 can be formed in the spool 14 to provide fluid communication from the spool bore 20 to a port 18 (e.g., port A).

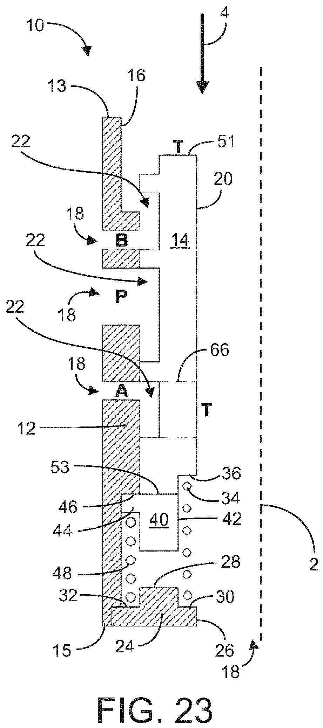

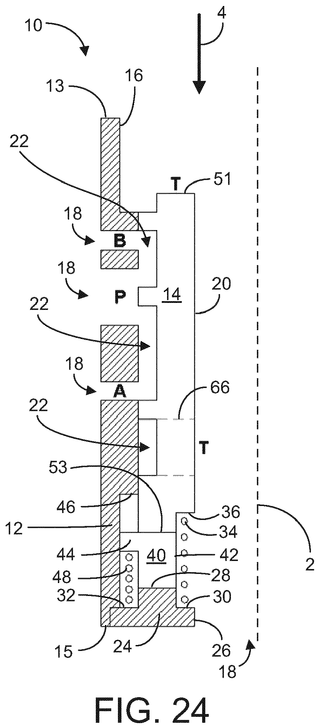

When the spool 14 is in the first position (e.g., Fig. 22, when the actuator is in a de-energized state), port A can be in fluid communication with port T and port B can be in fluid communication with port P. As such, when the spool 14 is in the first position, the control valve 10 is in the partially deactivated configuration. When the spool 14 is in the second position (Fig. 23), ports A and B can both be in fluid communication with port T. As such, the control valve 10 is in the activated configuration. When the spool 14 is in the third position (Fig. 24), ports A and B can both be in fluid communication with port P. As such, the control valve 10 is in the deactivated configuration.

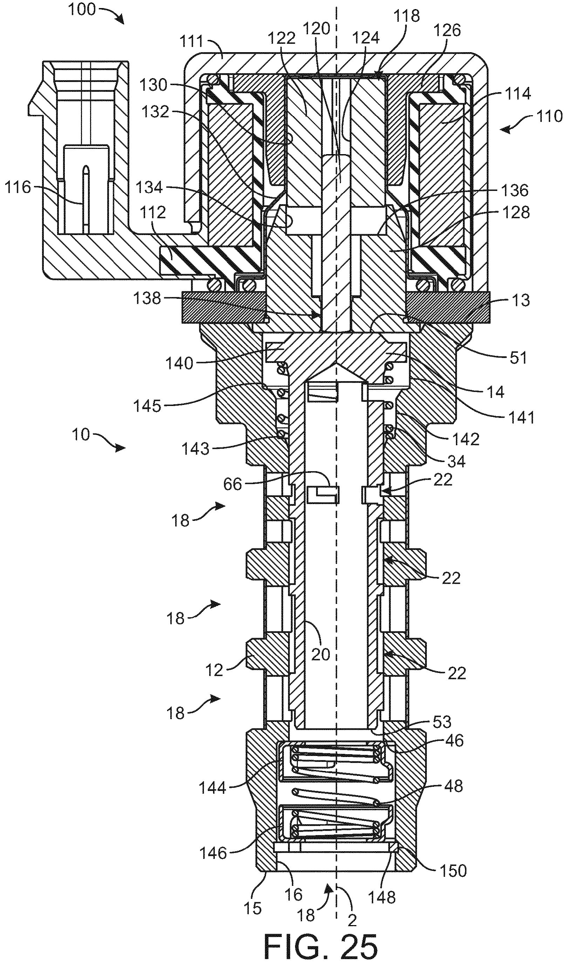

Referring now to Figs. 25-28, the control valve 10 may be integrated into an electro-hydraulic valve 100 with an electromagnetic actuator 110 coupled to the control valve 10. It should be understood that the control valve 10 depicted in Figs. 25-28, except as otherwise noted below, are identical to the control valve 10 described with reference to Figs. 1-4 and 15 in structure and functionality, and that all parts of the control valve 10 that are labeled with like reference numerals refer to similar parts. As such, only aspects that are substantially different than the non-limiting example shown in Figs. 1-4 and 15 will be explained in the following paragraphs.

The electromagnetic actuator 110, such as a solenoid actuator, can be received within a housing 111 and include a bobbin 112 and a winding 114. The winding 114 can be electrically coupled to an electrical connection 116 and wrapped around the bobbin 112. The actuator 110 can also include an armature 118, including an armature rod 120 and an armature body 122. The armature rod 120 can be rigidly coupled to the armature body 122 and extend from a distal end of the armature body 122 to engage the first end 51 of the spool 14 to apply an actuation force thereto. In one non-limiting example, the armature body 122 can have an armature bore 124 extending axially through the armature body 122. The armature bore 124 can be sized such that the armature rod 120 can be received therein.

The actuator 110 can also include one or more pole pieces. In the illustrated non-limiting example, the actuator 110 has a first pole piece 126 and a second pole piece 128 (e.g., a center pole piece). The first pole piece 126 defines a recess 130 configured to receive an armature tube 132. The armature tube 132 can be configured to at least partially receive the armature 118 such that the armature body 122 can be slidably received therein. The second pole piece 128 can define an armature recess 134 configured to at least partially receive at least one of the armature body 122 and the armature rod 120. In the illustrated non-limiting example, the armature recess 134 can have a stepped profile and define a flange 136. The upper end of the recess 130 and the flange 136 may define the end positions (e.g., axial end stops) for the armature 118. In the illustrated non-limiting example, the second pole piece can include an opening 138 therein to slidably receive the armature rod 120 and so that the armature rod 120 can protrude outside of the second pole piece 128 to engage with the first end 51 of the spool 14.

It is to be understood that the armature 118 depicted in Fig. 25 is not intended to be limiting in any way and that other armature configurations are readily envisioned by one of ordinary skill in the art. For example, the armature rod may not be coupled to the armature body and, instead, may be arranged between the spool and the armature body in a loose configuration where the armature rod is held in contact with the armature body by the spool (i.e., due to the springs biasing the spool towards the armature). In other configurations, the armature may not have an armature rod and can instead be formed of a single body. In any case, the armature can engage the spool to apply an actuation force thereto.

In the illustrated non-limiting example, the control valve 10 can include a first spring 34 and a second spring 48. In the illustrated non-limiting example, the first spring 34 can be arranged at the first end 51 of the spool 14 and the second spring 48 can be arranged adjacent to the second end 53 of the spool 14 opposite the first end 51. In other words, the springs can be arranged on opposing ends of the valve body 12. For example, the first spring 34 can be arranged adjacent to the first end 13 of the valve body 12 and the second spring 48 can be arranged adjacent to the opposing second end 15 of the valve body 12. The first spring 34 can be circumferentially wound around the outside of the spool 14. In the illustrated non-limiting example, the first spring 34 can be coupled between the spool 14 and the valve body 12. In the illustrated non-limiting example, the spool 14 can have a spool flange 140 extending radially outward from the first end 51 of the spool 14. The spool flange 140 can act as one spring seat for the first spring 34. In the illustrated non-limiting example, the first end 13 of the valve body 12 can have a stepped profile and define a spring recess 142 extending radially outward from the valve bore 16 and a spool recess 141 extending radially outward from the spring recess 142. A base 143 of the spring recess 142 can act as another spring seat for the first spring 34. As such, the first spring 34 can bias the spool 14 towards the first end 13 of the valve body 12. In the illustrated non-limiting example, the spool flange 140 can be slidably received within the spool recess 141 and a base 145 of the spool recess can act as an axial stop for the spool 14.

In the illustrated non-limiting example, the second spring 48 can be arranged between a first spring cup 144 and a second spring cup 146. The first spring cup 144 can engage the flange 46 arranged near the second end 15 of the valve body 12 and the second spring cup 146 can engage a snap-ring 148 received within a ring groove 150 at the second end 15 of the valve body 12. As such, when the spool 14 is out of engagement with the second spring 48, the second spring 48 can be pre-loaded to bias the first spring cup 144 into the flange 46 and the second spring cup 146 into the snap-ring 148.

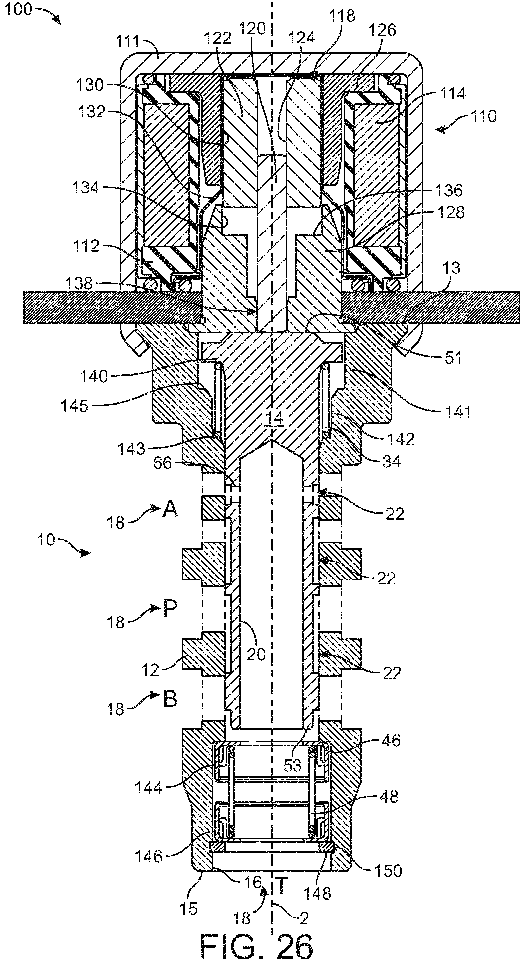

With reference towards Figs. 26-28, in operation, power can be applied to the winding 114, via the electrical connection 116, to bias the armature 118 towards the valve body 12 (downwards from the perspective of Fig. 25), thereby applying an actuation force to the spool 14. Due to the contact between the armature rod 120 and the spool 14, the axial displacement of the armature 118 can be substantially the same as the axial displacement of the spool 14.

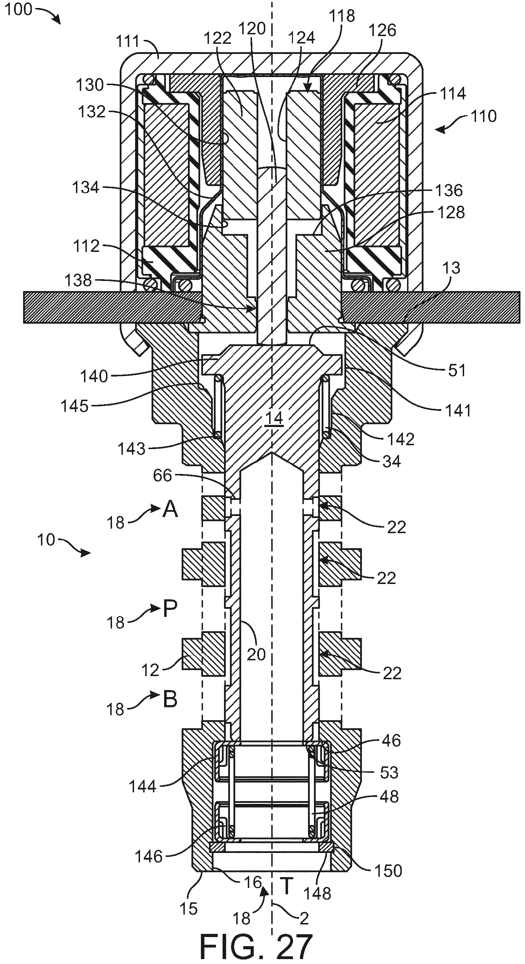

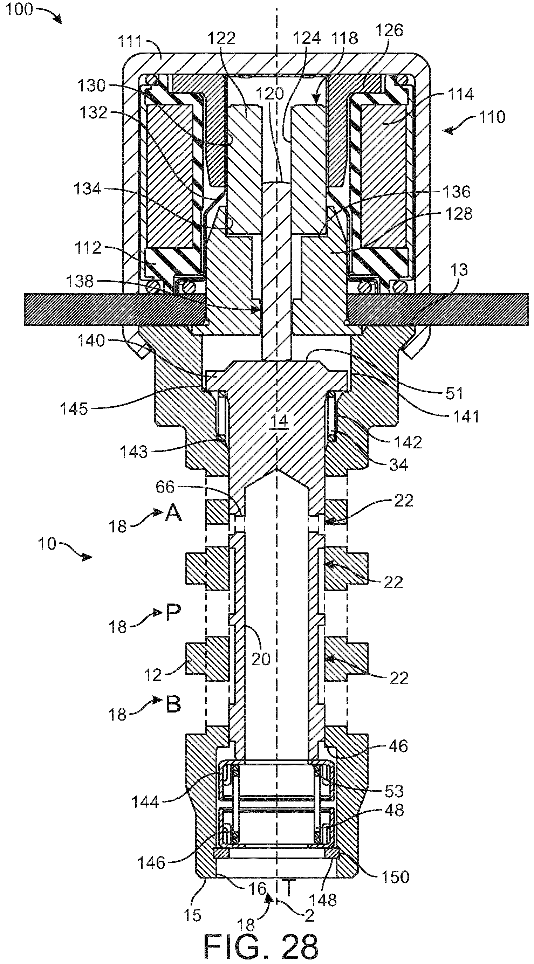

As previously described herein, the spool 14 can be moveable between a first position (Fig. 26), and second position (Fig. 27), and a third position (Fig. 28). With the spool 14 in the first position, a first end 51 of the spool 14 can be in contact with the armature 118 via the armature rod 120 to drive the spool towards the second end 15 of the valve body 12.

When the spool 14 is driven from the first position to the second position, the first spring 34 becomes compressed and a second end 53 of the spool 14 engages the first spring cup 144. Upon the spool 14 making contact with the first spring cup 144, the second spring 48 and the first spring 34 both act on the spool 14 against the actuation force provided by the actuator 110 to maintain the spool 14 in the second position. As previously described herein, the spool 14 can be maintained in the second position over a predetermined range of actuation forces (e.g., see Fig. 4). When the spool 14 is driven from the second position to the third position, the first spring 34 and the second spring 48 become compressed and the spool flange 140 engages the base 145 of the spool recess 141 within the valve bore 16, thereby defining the third position of the spool 14.

With continued reference towards Figs. 26-28, yet another non-limiting example of a port configuration for the control valve 10 is illustrated. In the illustrated non-limiting example, pressurized fluid from the fluid source (not shown) can be provided to ports A and B via the annuli 22 formed within the spool 14 and the ports 18 formed in the valve body 12 (e.g., port P), as is known in the art. In the illustrated non-limiting example, fluid can be exhausted to the tank (not shown) from port A and/or port B through the ports 18 formed in the valve body 12, to the annuli 22 formed in the spool 14, which can provide a fluid conduit the spool bore 20, as is known in the art. The fluid may then be exhausted out of the valve bore 16 at the second end 15 of the valve body 12 (e.g., port T). In the illustrated non-limiting example, port A can be designed as a looped port. This may, for example, enable port A to provide fluid communication to both ports T or P without significantly increasing the stroke of the spool 14.

When the spool 14 is in the first position (e.g., Fig. 26, when the actuator 110 is in a de-energized state), ports A and B can both be in fluid communication with port T. As such, the control valve 10 is in the activated configuration. When the spool 14 is in the second position (Fig. 27), ports A and B can both be in fluid communication with port P. As such, the control valve 10 is in the deactivated configuration. When the spool 14 is in the third position (Fig. 28), port A can be in fluid communication with port T and port B can be in fluid communication with port P. As such, the control valve 10 is in the partially deactivated configuration.

With the control valve 10 configured to be de-energized in the activated configuration (e.g., in a configuration where the intake/exhaust valves are enabled to operate normally), this can enable an internal combustion engine to continue to operate normally, even if power were cut or otherwise removed from the actuator 110. In this case, the first spring 34 would maintain the spool 14 in the first position.

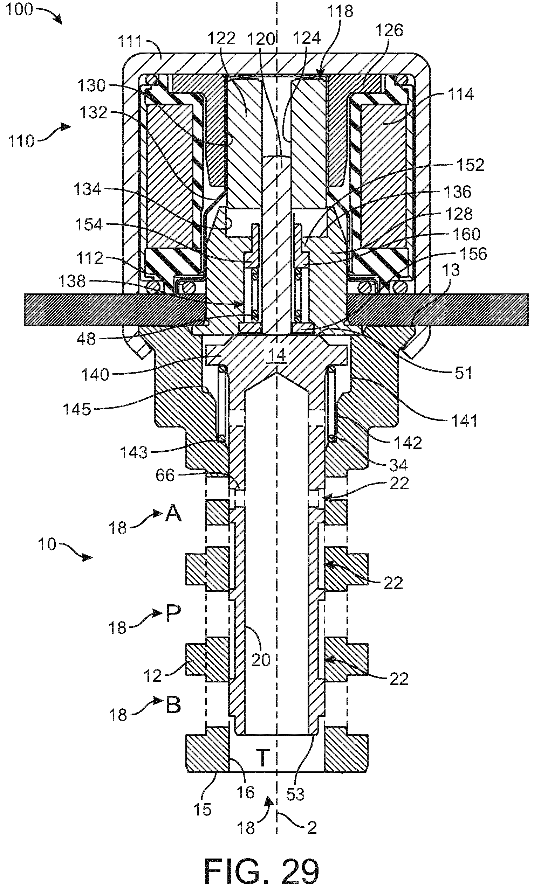

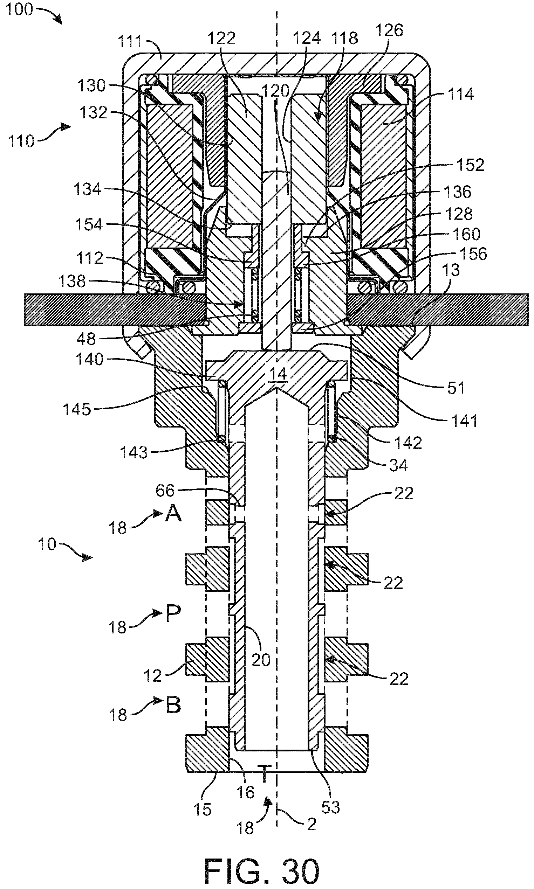

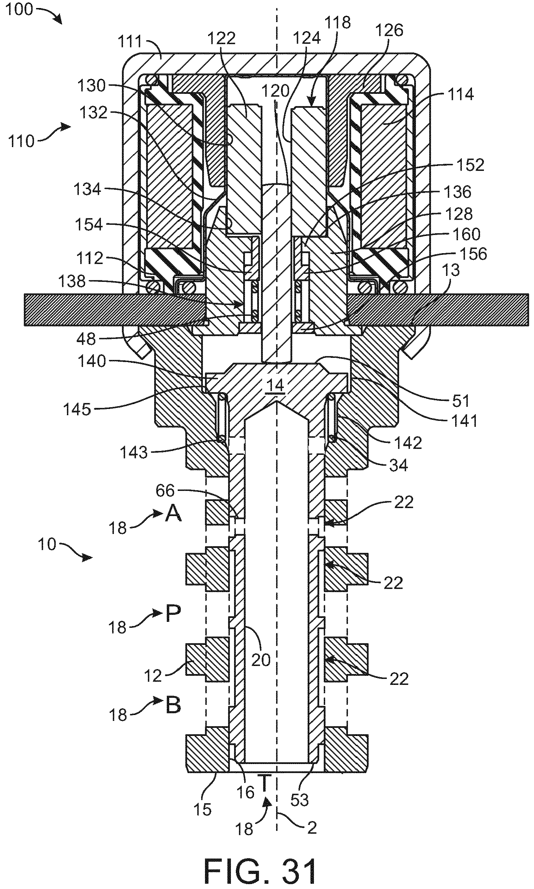

Referring now to Figs. 29-31, the control valve 10 may be integrated into an electro-hydraulic valve 100 with an electromagnetic actuator 110 coupled to the control valve 10. It should be understood that the control valve 10 and the actuator 110 depicted in Figs. 29-31, except as otherwise noted below, are identical to the control valve 10 and actuator 110 described with reference to Figs. 25-28 in structure and functionality, and that all parts of the control valve 10 and the actuator 110 that are labeled with like reference numerals refer to similar parts. As such, only aspects that are substantially different than the non-limiting example shown in Figs. 25-28 will be explained in the following paragraphs.

Most notably, in the illustrated non-limiting example, the first spring 34 and the second spring 48 are arranged adjacent to the first end 51 of the spool 14. As illustrated, the second spring 48 can be arranged on a top side of the first end 51 of the spool 14 and the first spring 34 can be arranged on an opposing bottom side of the first end 51 of the spool 14 (e.g., below the spool flange 140). The second spring 48 can be incorporated into the second pole piece 128. The opening 138 in the second pole piece 128 can be a stepped profile defining a flange 152 at an upper end thereof (e.g., adjacent to the armature body 122). The second spring 48 can be circumferentially wound around the armature rod 120 and arranged between an L-shaped annular ring 154 and a washer-like spring retainer 156. The annular ring 154 can be slidably received on the armature rod 120 and extend axially through the opening 138 into the armature recess 134. In the illustrated non-limiting example, the armature body can engage with the annular ring 154 during actuation of the armature 118.

In the illustrated non-limiting example, the flange 152 of the second pole piece 128 can act as an axial stop for the annular ring 154 via engagement with a protrusion 160 extending radially outward from the annular ring 154. The spring retainer 156 can be fixedly coupled to the second pole piece 128 and receive the armature rod 120 therethrough. Thus, the displacement of the armature 118 causes the armature body 122 to engage the annular ring 154, thereby compressing the second spring 48.

In operation, when the spool 14 is driven from the first position to the second position, the first spring 34 becomes compressed and the armature body 122 engages the annular ring 154. Upon the armature body 122 making contact with the annular ring 154, the second spring 48 acts on the armature 118 and the first spring 34 acts on the spool 14 against the actuation force provided by the actuator 110 to maintain the spool 14 in the second position. As previously described herein, the spool 14 can be maintained in the second position over a predetermined range of actuation forces (e.g., see Fig. 4). When the spool 14 is driven from the second position to the third position, the first spring 34 and the second spring 48 become compressed and the spool flange 140 engages the base 145 of the spool recess 141 within the valve bore 16, thereby defining the third position of the spool 14.

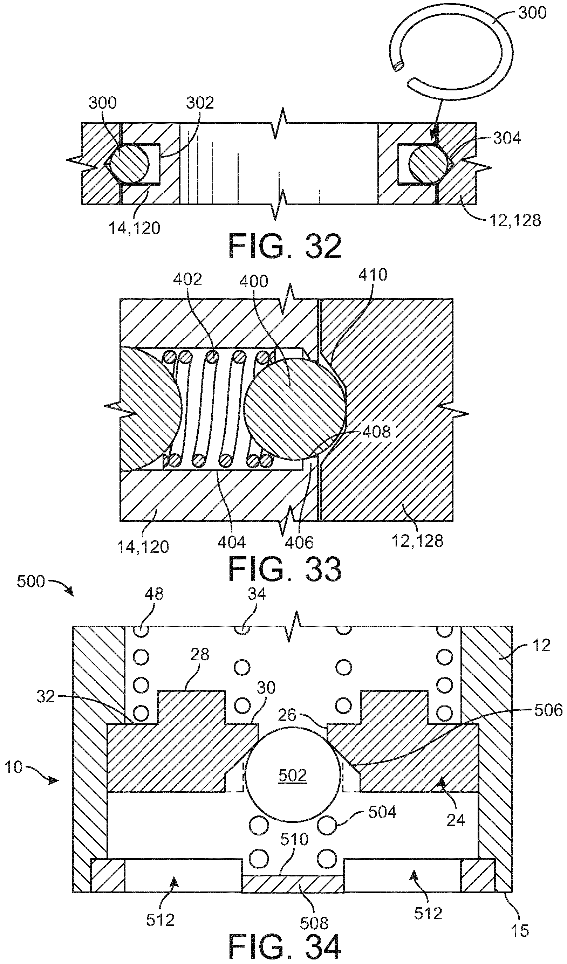

With reference now to Figs. 32-33, other variations of a mechanism configured to maintain the spool valve in the second position are envisioned. For example, with reference to Fig. 32, the second spring can be replaced with a ring and groove combination configured to create the dead band at a predetermined location in the stroke of the spool. In the illustrated non-limiting example, a ring 300 can be received within a ring groove 302 formed within the spool 14. The valve body 12 may then have a detent groove 304 formed therein. As the spool 14 is actuated in the region of the detent groove 304, the ring 300 can be configured to expand into the detent groove 304, thereby holding the spool in the second position over a predetermined range of actuation forces until the actuation force is large enough to overcome the retention of the ring 300 in the detent groove 304.

Similarly, the ring 300 can be received within a ring groove 302 formed within the armature rod 120. The second pole piece 128 may then have a detent groove 304 formed therein. As the spool 14 is actuated in the region of the detent groove 304, the ring 300 can be configured to expand into the detent groove 304, thereby holding the armature rod 120, and thereby the spool 14, in the second position over a predetermined range of actuation forces until the actuation force is large enough to overcome the retention of the ring 300 in the detent groove 304.

In another non-limiting example, with reference to Fig. 33, the second spring can be replaced with a spring loaded ball detent device to create the dead band at a predetermined location in the stroke of the spool. In the illustrated non-limiting example, a ball 400 and a spring 402 can be received within an aperture 404 formed within the spool 14. The aperture 404 can have a flange 406 at an opening 408 thereof. The flange 406 can be configured to prevent the ball 400 from being released from the opening 408 of the aperture 404, for example, during assembly of the valve. The valve body 12 may then have a detent groove 410 formed therein. As the spool 14 is actuated in the region of the detent groove 410, the ball 400 can be configured to enter the detent groove 410 via the spring 402 applying a biasing force onto the ball 400, thereby holding the spool in the second position over a predetermined range of actuation forces until the actuation force is large enough to overcome the retention of the spring loaded ball 400 in the detent groove 410.

Similarly, a ball 400 and a spring 402 can be received within an aperture 404 formed within the armature rod 120. The second pole piece 128 may then have a detent groove 410 formed therein. As the armature rod 120 is actuated in the region of the detent groove 410, the ball 400 can be configured to enter the detent groove 410 via the spring 402 applying a biasing force onto the ball 400, thereby holding the armature rod 120, and thus the spool 14, in the second position over a predetermined range of actuation forces until the actuation force is large enough to overcome the retention of the spring loaded ball 400 in the detent groove 410.

In either case, the stiffness of the ring 300, the stiffness/preload of the spring 402, and/or the geometry of the detent groove 304,410 may be adjusted or optimized to increase or decrease the size of the predetermined range of actuation forces.

Referring now towards Fig. 34, a check valve assembly 500 can be arranged at the second end 15 of the valve body 12 of the control valve 10 illustrated in Figs. 16-18. It is to be understood by one of ordinary skill in the art that the check valve assembly 500 can be arranged within the other various spool valves disclosed herein to perform the same functions described below. In the illustrated non-limiting example, the check valve assembly can include a ball 502 biased into the opening 26 of the end cap 24 via a spring 504. The opening 26 may define a conical profile to form a ball seat 506 for the ball 502. The check valve assembly 500 can also include an end plate 508 fixedly coupled to the valve body 12. The end plate 508 may define a spring seat 510 recessed therein to receive the spring 504 and one or more openings 512 to provide fluid communication from within the valve bore 16 to outside the valve body 12 (e.g., to a tank).

The check valve assembly 500 can be configured to open at a predetermined pressure to exhaust fluid if the pressure within the valve bore 16 exceeds the predetermined pressure. This can, for example, ensure that the other ports on the valve body (e.g., ports A and B, see Figs. 16-18) can maintain at least the predetermined pressure thereto, even when the control valve 10 is in a configuration to exhaust the ports to tank.

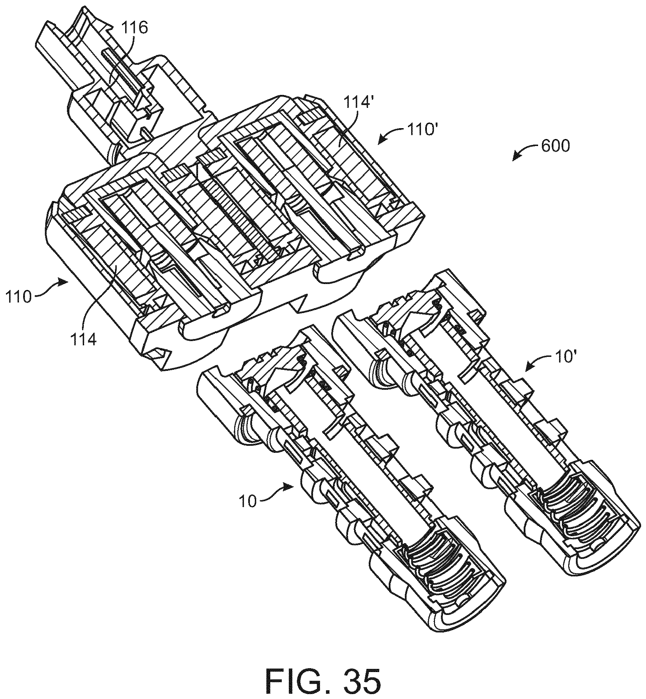

Referring now to Fig. 35, the control valve 10 may be integrated into a dual electro-hydraulic valve 600 with a first electromagnetic actuator 110 coupled to a first control valve 10 and a second electromagnetic actuator 110' coupled to a second control valve 10'. It should be understood that the control valves 10,10' and the electromagnetic actuators 110,110' depicted in Fig. 35, except as otherwise noted below, are identical to the control valve 10 and actuator 110 described with reference to Fig. 25 in structure and functionality, and that all parts of the control valves 10,10' and actuators 110,110' that are labeled with like reference numerals refer to similar parts. As such, only aspects that are substantially different than the non-limiting example shown in Fig. 25 will be explained.

In the illustrated non-limiting example, the windings 114,114' can be electrically coupled to the electrical connection 1 such that each of the actuators 110,110' can be controlled by a single electrical connection 116.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

Thus, while the invention has been described in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein.

Various features and advantages of the invention are set forth in the following claims.

## Claims

1. A control valve comprising:
a valve body including a valve bore extending therethrough and a plurality of ports;
a spool received within the valve bore and moveable between one or more end positions and an intermediate position positioned axially between the one or more end positions, wherein each of the one or more end positions and the intermediate position defines a unique port configuration;
an electromagnetic actuator configured to selectively provide an actuation force to actuate the spool between the one or more end positions and the intermediate position; and
a first spring and a second spring configured to provide a combined spring force on the spool in a direction that opposes the actuation force of the electromagnetic actuator, wherein the combined spring force is configured to provide a step-change in magnitude when the spool is actuated to the intermediate position from one of the one or more end positions.

2. The control valve of claim 1, wherein the step-change in the combined spring force is configured to maintain the spool in the intermediate position over a predetermined range of actuation forces.

3. The control valve of claim 2, wherein the predetermined range of actuation forces is configured to be adjusted based on at least one of a stiffness of the first spring, a stiffness of the second spring, a preload of the first spring, or a preload of the second spring.

4. The control valve of claim 1, wherein when the spool is in the intermediate position, the first spring is compressed and the second spring is engaged, thereby providing the step-change in magnitude by the combined spring force.

5. The control valve of claim 1, wherein each of the unique port configurations provide a flow path between at least two of the plurality of ports.

6. The control valve of claim 1, wherein the first spring and the second spring are arranged on opposing ends of the valve body.

7. The control valve of claim 1, wherein the first spring and the second spring are both arranged adjacent to a first end or a second end of the spool.

8. The control valve of claim 1, wherein the first spring and the second spring are arranged on opposing sides of a first end of the spool.

9. The control valve of claim 1, wherein the first spring is coupled between the spool and the valve body.

10. The control valve of claim 1, further comprising a valve element slidably received within the valve bore, wherein the second spring is arranged between the valve element and the valve body.

11. The control valve of claim 10, wherein when the spool is actuated to the intermediate position, the spool contacts the valve element thereby engaging the second spring.

12. The control valve of claim 1, wherein the first spring is engaged in each of the one or more end positions and the intermediate position.

13. The control valve of claim 1, wherein the one or more end positions includes a first end position and a second end position, wherein the intermediate position is positioned axially between the first end position and the second end position.

14. The control valve of claim 13, wherein when the spool is in the second end position, the first spring and the second spring are each compressed.

15. The control valve of claim 1, wherein the plurality of ports includes four ports.
